(19) Europäisches Patentamt
European Patent Office
Office européen des brevets

(11) EP 1 041 578 A2

(12) **EUROPEAN PATENT APPLICATION**

(43) Date of publication:
04.10.2000 Bulletin 2000/40

(51) Int Cl.$^7$: **G21C 3/62**

(21) Application number: 00302390.0

(22) Date of filing: 23.03.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **24.03.1999 US 274998**

(71) Applicant: **GENERAL ELECTRIC COMPANY Schenectady, NY 12345 (US)**

(72) Inventors:
• **Larson, Richard Ingwald Wilmington, North Carolina 28403 (US)**

• **Summey III, James Writ Wrightsville Beach, North Carolina 28480 (US)**
• **Squires, Marian D. Burgaw, North Carolina 28425 (US)**
• **Peters, William Carter Wilmington, North Carolina 28412 (US)**

(74) Representative: **Pedder, James Cuthbert et al GE London Patent Operation, Essex House, 12/13 Essex Street London WC2R 3AA (GB)**

(54) **Process for converting uranium metal alloys to UO2 powder and pellets**

(57) Process for producing UO$_2$ powder, comprising heating ammonium diiuranate obtained by solvent extraction of an acid solution of uranium and metal impurities generated by oxidation of a uranium-containing metal alloy powder at elevated temperature.

## FIG. 1

Size Reduction (1) → Oxidation (2) → Dissolving (3) → Filtration (4) → Solvent Extraction (5) → Purified Uranyl Nitrate Storage (8) → Precipitation of Ammonium DiUranate (9)

Filtration (4) → Solid Waste Treatment (6)

Solvent Extraction (5) → Liquid Waste Treatment (7)

Centrifuge (10) → Conversion to Uranium Dioxide (11) → Mill Slug Granulate (12) → Press (13) → Sinter (14) → Grind (15) → Load into Fuel Rods (16)

EP 1 041 578 A2

**Description**

The present application relates to the manufacture of fissionable nuclear fuel comprising oxides of enriched uranium for use in nuclear reactors. In particular, the invention relates to a production process for converting uranium metal alloys to $UO_2$ powder and pellets by way of an oxidation process.

Fissionable fuel grade uranium oxides for service in power generating nuclear reactors are commonly produced from uranium hexafluoride. Generally, uranium hexafluoride is converted to uranium oxides for reactor fuel using a "wet process" in which the conversion reactions are carried out within an aqueous medium or liquid phase with the reactants in solution and/or as a solid suspension therein. Typically, this wet process comprises hydrolyzing uranium hexafluoride ($UF_6$) in water to form the hydrolysis product uranyl fluoride ($UO_2F_2$), adding ammonium hydroxide to the uranyl fluoride to precipitate the uranyl fluoride as solid ammonium diuranate (($NH_4$)$_2U_2O_7$). The precipitate is dewatered and calcined in a reducing atmosphere to produce an oxide of uranium (e.g. $UO_2$). This version of the wet process is frequently referred to as the "ADU" procedure, since it normally entails the formation of ammonium diuranate.

The uranium oxides commercially produced by such conventional methods comprise a fine relatively porous powder which is not suitable for use as such as fuel in a nuclear reactor. Typically, it is not a free-flowing relatively uniform-sized powder, but rather clumps and agglomerates to form particles of varying sizes, making it unsuitable to uniformly pack into units of an appropriate and consistent density. In view of this, the raw uranium oxide product derived from the chemical conversion process is normally processed through conventional powder refining procedures, such as milling and particle classification to provide an appropriate sizing of the powders. Such processing frequently includes blending of uranium oxide powders of different particle sizes or ranges and from different sources. The resulting processed powders are then press-molded into "green" or unfired pellets, which are subsequently sintered to fuse the discrete powder particles thereof into an integrated body having a unit density of 95 - 97% of theoretical ("TD") of the oxide of uranium. These pellets are more suitable for utilization in the fuel system of a nuclear reactor.

During the foregoing chemical conversion process, $UO_2$ scrap materials such as sintered pellets, grinder swarf, press scrap, and calciner powder are produced. These materials are conventionally recycled. Usually, scrap $UO_2$ materials from the production facility are oxidized in a high-temperature furnace to produce $U_3O_8$, which is then reacted with nitric acid to produce uranyl nitrate solutions. ADU is precipitated from these solutions by addition of ammonium hydroxide. The ADU precipitate may or may not be dried before processing through the calciner in a hydrogen-reducing environment to produce $UO_2$ powder. This $UO_2$ powder has a high sinter density, generally greater than 98% TD. In addition, sintered pellets produced from this $UO_2$ powder have a low open porosity, uniform microstructure and good production yields, i.e. without radial cracks and end flakes.

A disadvantage of using $UF_6$ as a starting material is the adverse environmental impact along with difficulties in handling and shipping. A need exists therefore for a process of providing high quality $UO_2$ powder for use in nuclear power reactors using a starting material other than $UF_6$. The present invention seeks to provide such a process.

It has been discovered according to the present invention that instead of providing enriched uranium in the form of $UF_6$ gas, the initial or base material that is converted to $UO_2$ powder and pellets, the uranium may be in the form of a uranium metal alloy, such as U/Fe, U/Ni, and U/Cr. These alloys contain a number of metal impurities, such as aluminum, boron, copper, manganese, etc. Consequently, the metal impurities must be separated from uranium in order to produce $UO_2$ powder and pellets that meet the ASTM or typical utility specification for $UO_2$ powder. (It is noted that the typical Nuclear Powder Utility specifications are more restrictive than the ASTM specification.) The present invention provides a production process that converts uranium metal alloys to ceramic grade $UO_2$ powder.

In a first embodiment, the present invention provides a process for producing $UO_2$ powder, comprising calcining ammonium diuranate obtained by solvent extraction of an acid solution of uranium obtained by oxidation of a uranium-containing metal alloy powder at elevated temperature, to produce $UO_2$ powder.

In a further embodiment, the invention provides a process for producing $UO_2$ powder, comprising the steps of comminuting a uranium-containing metal alloy to produce a uranium-containing metal alloy powder, oxidizing the uranium-containing metal alloy powder at elevated temperature to produce oxidized particles containing $U_3O_8$ and metal impurities without ignition or burning, generating an acidic solution of the oxidized particles containing $U_3O_8$, filtering the resulting slurry to produce a filtrate, subjecting the filtrate to solvent extraction by conventional means, such as tributylphosphate in n-dodecane, to remove remaining metal impurities, precipitating the uranium as ammonium diuranate, and heating the precipitated ammonium diuranate to produce $UO_2$ powder.

In another embodiment, the invention provides $UO_2$ powder produced by the process of the invention.

The process is generally carried out under conditions such that ignition or burning does not occur, either during the comminution or oxidation operations. The uranium metal alloy is comminuted to form a powder by using size reduction equipment such as, for example, a jaw crusher, to provide the particle size distribution required for oxidation. Oxidation of the uranium and alloy components (e.g. iron or nickel or chromium) is performed at elevated temperatures, typically in a furnace at a temperature in the region of 350-500°C., more usually at about 400°C, and the rate that meets the production requirements, typically in the region of 30 kgs (U)/hr.

The process of the present invention converts uranium metal alloys, such as U/Fe, U/Ni, and U/Cr, to ceramic grade $UO_2$ powder. The percent of the alloying element in the alloy may be as high as 15 percent by weight, more usually in the region of 8-12 percent by weight. The oxidation of the metal alloy is controlled to prevent burning of the material.

The selection and operation of equipment are dependent on the ignition temperature and pyrophoricity behavior of the material, the production rate required, and criticality and radiological safety considerations in dealing with enriched uranium. The ignition temperature and pyrophoricity behavior may be established initially through a series of tests that vary the particle size of the material, since the ignition temperature is usually a function of the specific surface area, expressed as $m^2/gm$, or particle size, of the alloy. With these data, it is then possible to specify the size reduction equipment, oxidation equipment, operating temperature range, and the gaseous environment of each unit operation.

Impurities in the alloy, such as iron, aluminum, boron, copper, manganese, etc., which initially did not meet either the ASTM specifications or utility specifications for $UO_2$ powder, may be separated from uranium by dissolving the oxidized alloy in nitric acid. The resulting uranyl nitrate slurry is further purified by a combination of filtration and solvent extraction.

Following the determination of the ignition temperature and pyrophoricity behavior, additional tests may be performed to determine the process equipment and operating conditions to completely convert the uranium metal alloy to an oxide. The oxide is then dissolved in nitric acid without excess $NO_x$ evolution. Dissolution of the metal alloy directly into nitric acid requires about twice the amount of $HNO_3$. Also, about 10 times the $NO_x$ generation occurs as compared to $U_3O_8$ oxidation process described herein.

Criticality and radiological requirements also impact the size and design of the equipment, because of the enrichment and radioactivity of uranium. In general, equipment sizes must be smaller as the maximum enrichment of uranium being processed is increased. Also, criticality safe batch limits for enrichments above 4 or 5 percent are so small that production equipment must normally be designed to be inherently safe by geometry. For enrichments around 5 percent, these safe geometry limits restrict operations to cylindrical tanks with diameters less than 9 to 10 inches or to rectangular or annular vessels with at least one of the dimensions being less than 4 to 5 inches.

Radiological considerations impact the design of the equipment, because operations must provide adequate containment of both airborne and potentially soluble uranium. These constraints are usually met with containment hoods with suitable negative pressure and with leak prevention and/or containment devices like double block and bleed valves, dike areas with sumps, or operations restricted to sealed isolation areas.

The invention will now be described in more detail with reference to the accompanying drawings, in which:

Figure 1 is a process flow diagram for converting U/Fe alloy into ceramic grade $UO_2$ powder;

Figure 2 is a graph showing the oxidation rate data for +20 mesh particles as a function of time;

Figure 3 is a graph showing filtration rate of uranyl nitrate solution with $\alpha$-$Fe_2O_3$ particulate material through production filter media.

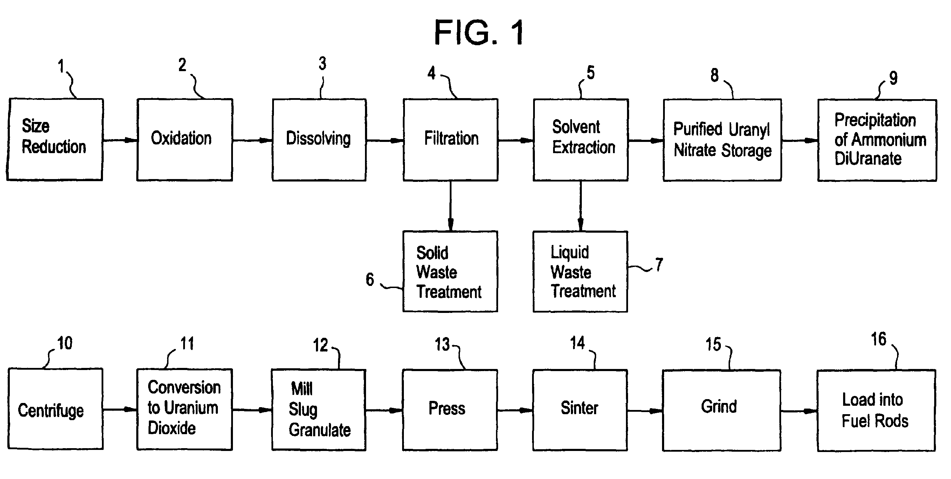

Referring to the drawings, Figure 1 shows the process flow diagram for converting the U/Fe alloy into ceramic grade $UO_2$ powder. While the production process described herein involved the method of converting the U/Fe alloy into $UO_2$ powder, the process of the invention also applies to other uranium metal alloys, such as U/Ni, and U/Cr.

In Figure 1, step 1 is a size reduction step which is typically carried out using a jaw crusher or other suitable apparatus to achieve the desired particle size range. Step 2 is an oxidation step which is carried out generally in a furnace at elevated temperature, usually in the region of 350 to 550 °C, more usually about 400 °C. This is followed by a dissolution step (step 3) wherein the oxidized alloy containing $U_3O_8$ and metal impurities is dissolved in nitric acid to form a uranyl nitrate slurry which is purified by filtration (step 4) and/or solvent extraction (step 5), to produce a purified acid solution containing uranyl nitrate. Solid and liquid waste (6 and 7) are removed and subjected to further treatment, while purified uranyl nitrate is optionally stored (step 8). Precipitation of ammonium diuranate (step 9) is carried out using ammonium hydroxide as precipitating agent. The precipitate is separated by centrifuging the mixture (step 10), followed by conversion to uranium dioxide ($UO_2$) by conventional calcining in the presence of hydrogen (step 11) to reduce the ADU to $UO_2$. The resulting uranium dioxide power is subjected to milling, slugging and granulation (step 12), following by pressing, sintering and grinding (steps 13-15) to produce pellets, followed by loading into fuel rods (step 16) as desired.

As compared to processes described in Patent Nos. 4,656,015 and 5,514,306, the process of the present invention includes a particle size reduction operation and an oxidation furnace operation. The process converts the small uranium metal alloy particles to $U_3O_8$ and $Fe_2O_3$ (when the alloy used is U/Fe).

The uranium alloy, typically provided in the form of disks about one inch in diameter and ¼ to ½ inches thick, is comminuted to produce alloy particles of a size such that the particles are completely oxidized in the furnace at a production rate of 30 kgs U/hr. Typically the particles range in size from 20 mesh to 200 mesh (i.e., typically between 75 microns and 850 microns, for example 150 microns to 425 microns).

Uranium metal is pyrophoric in air and oxygen (1). That is, spontaneous ignition occurs at a temperature of about 240 °C. This type of ignition depends on the rate at which the uranium surface oxidizes in air balanced against the rate at which the heat of reaction is lost to the surroundings. Therefore, the particle size or the particle surface area per unit weight, usually expressed as $m^2/gm$, is an important factor in the process for converting the metal into $UO_2$ powder.

No information was available in the literature describing the pyrophoricity or ignition temperature behavior of the U/Fe Alloy material. Burning or ignition tests have accordingly been performed. These tests showed an exothermic oxidation reaction of the U/Fe Alloy between 180 °C and 330 °C. Temperatures above 600 °C were required for the reaction to progress to ignition, but this only occurred with particles in the size range of 106 $\mu$m or finer. Based on these pyrophoricity results, it appears that the size reduction and oxidation operations performed according to the present invention do not require an inert atmosphere glove box or controlled atmospheric environment to prevent ignition.

Sparks, smoke and heat were still observed during the size reduction operation, but the material did not burn, as the temperatures were significantly below 600 °C. Scanning electron microscopy examination of the alloy show "iron rich" grain boundaries that appear to inhibit the typical pyrophoricity characteristics of uranium metal.

The U/Fe alloy discs were brittle and easily reduced in size with a force of a hammer. An appropriate size reduction equipment is a jaw crusher. Other types of size reduction equipment may be used, such as a roll crusher, depending on the physical characteristics of the alloy and the pyrophoricity temperature and particle size.

Initially, prior to completion of the pyrophoricity study, the size reduction work was performed in a glove box with an argon atmosphere. Sparks, smoke, and heat were observed during the size reduction operation in the jaw crusher. It was thought that the argon atmosphere prevented burning. Table 1 summarizes the size reduction results.

Table 1

| Size Reduction | Using Laboratory | Jaw Crusher Without | Modifications |
|---|---|---|---|
| Screen Size | Screen Opening Microns | Amount of Alloy Retained, gms | Percent of Total |
| 10 Mesh | 2000 | 100.05 | 78.7 |
| 20 Mesh | 850 | 17.66 | 13.9 |
| 40 Mesh | 425 | 5.97 | 4.7 |
| 70 Mesh | 212 | 2.18 | 1.7 |
| 100 Mesh | 150 | 0.50 | 0.4 |
| 200 Mesh | 75 | 0.46 | 0.4 |
| Fines <200 Mesh | <75 | 0.25 | 0.2 |

A new set of jaws having vertical grooves was installed to minimize the amount of blockage by the crushed materials as it discharged from the unit. Table 2 summarizes the results of this size reduction operation.

Table 2

| Size Reduction With Jaw Crusher Modifications | | | |
|---|---|---|---|
| Screen Size | Screen Opening Microns | Amount of Alloy Retained, gms | Percent of Total |
| 10 Mesh | 2000 | 46.96 | 48.2 |
| 20 Mesh | 850 | 40.35 | 41.4 |
| 40 Mesh | 425 | 6.75 | 6.9 |
| 70 Mesh | 212 | 2.15 | 2.2 |
| 100 Mesh | 150 | 0.51 | 0.5 |
| 200 Mesh | 75 | 0.46 | 0.5 |
| Fines <200 Mesh | <75 | 0.20 | 0.2 |

Based on the performance of the laboratory jaw crusher, a Badger Jaw Crusher with a 5" x 7" jaw capacity was purchased for the production operation. This unit produced a particle size distribution that oxidized at a rate that was compatible with the production rates required, in this case, 30 kgs (U) per hour. The configuration of the unit required modification of the feed hopper and catch pan to meet nuclear criticality requirements.

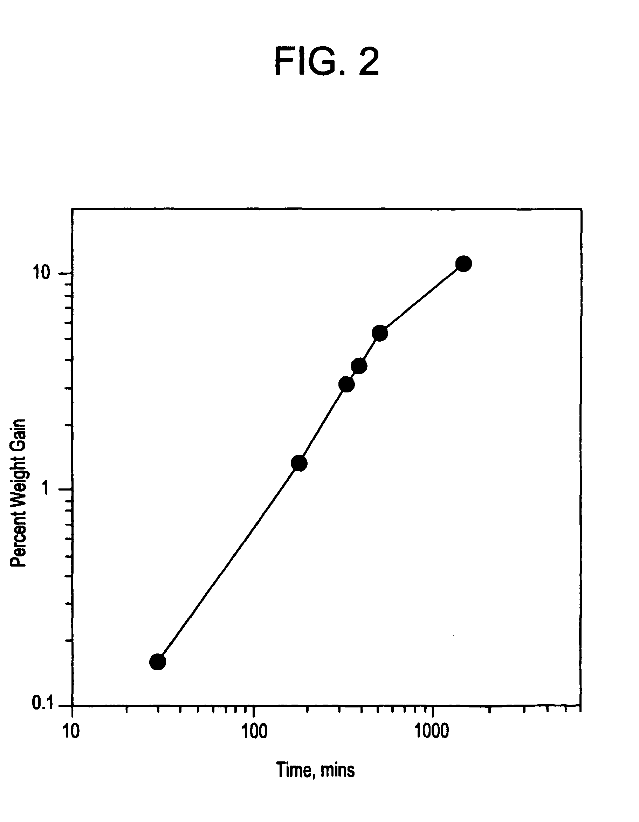

Figure 2 shows, for each of the size fractions oxidized at 240°C., the oxidation rate for +20 mesh particles. The percent weight gain is plotted against time. A two-stage oxidation rate mechanism is observed. The reaction rate is a strong function of particle size as noted in fitting the data to the following equation.

$$y = kt^n$$

where y - percent weight gain; k - rate constant and t - time

| Particle Size Mesh | k | n | Percent Conversion 24 hours |
|---|---|---|---|
| +10 | $1.46 \times 10^{-5}$ | 1.83 | 47 |
| +20 | $2.22 \times 10^{-2}$ | 0.86 | 62 |
| +40 | $2.63 \times 10^{-2}$ | 0.92 | -- |
| +70 | 0.10 | 0.69 | 82 |
| +100 | 0.27 | 0.57 | 89 |
| +200 | 0.13 | 0.67 | 90 |
| <200 | 0.41 | 0.61 | 86 |

At 240 °C., the particles are not completely oxidized after 24 hours. Consequently, production operation at these temperature conditions is not feasible. Pyrophoricity testing showed it was possible to perform oxidation tests at 400 °C to 500 °C without ignition or burning of the U/Fe alloy particles.

Table 3 summarizes the oxidation rate data at 413 °C for all particle size fractions. The oxidation time is reduced significantly. A complete reaction is equivalent to a percent weight change of 19.05 to 19.30 for the U/Fe alloy having an iron percentage of 4.5 to 6.0 percent, respectively. All particle size fractions show a complete reaction within 3 hours, except for the +10 mesh material.

EP 1 041 578 A2

### Table 3
### U/Fe Oxidation Results
### $U_3O_8$ Product
### Temperature - 413 °C

| Particle Size Mesh | Net Weight gms | Time hrs. | Weight Change gms | Percent Weight Change | Particle Size Mesh | Net Weight gms | Time hrs. | Weight change gms | Percent Weight Change |
|---|---|---|---|---|---|---|---|---|---|
| +10 | 10.0031 | 2 | 1.4383 | 14.38 | +70 | 10.7747 | 2 | 2.0709 | 19.22 |
|  | 10.0031 | 3 | 1.7263 | 17.26 |  | 10.7747 | 4 | 2.1436 | 19.89 |
|  | 10.0031 | 4 | 1.8715 | 18.71 |  |  |  |  |  |
|  | 10.0031 | 20 | 1.9106 | 19.10 | +100 | 2.8668 | 4 | 0.569 | 19.85 |
| +20 | 10.0778 | 1 | 1.6097 | 15.97 | +200 | 2.4248 | 4 | 0.4761 | 19.63 |
|  | 10.0778 | 2 | 19.040 | 18.89 |  |  |  |  |  |
|  | 10.0778 | 3 | 1.9639 | 19.49 | <200 | 1.0819 | 4 | 0.2104 | 19.45 |
|  | 10.0778 | 5 | 2.0051 | 19.90 |  |  |  |  |  |
| +40 | 10.0166 | 1 | 1.2808 | 12.79 |  |  |  |  |  |
|  | 10.0166 | 3 | 1.9594 | 19.56 |  |  |  |  |  |

Weight Change - Complete Reaction

|  | U | Fe | % Wt. Change |
|---|---|---|---|
| 4.5 wt% Fe | 1.712045 | 0.193375 | 19.05 |
| 5.0 wt % Fe | 1.703081 | 0.214861 | 19.18 |
| 6.0 wt% Fe | 1.694118 | 0.23647 | 19.30 |

The dissolution of uranium metal as compared to $U_3O_8$ requires about twice (4/2.22) the amount of nitric acid to dissolve. This is shown below.

$$U + 4\ HNO_3 \rightarrow UO_2(NO_3)_2 + 2\ NO + H_2O \tag{1}$$

$$1/3\ U_3O_8 + 20/9\ HNO_3 \rightarrow UO_2(NO_3)_2 + 2/9\ NO + 10/9\ H_2O \tag{2}$$

Moreover, $NO_x$ gas generation is considerably less by almost a factor of 10. Consequently, the offgas system is simplified considerably. $\alpha$-$Fe_2O_3$, hematite, formed during the oxidation process does not dissolve in nitric acid, and remains behind in the uranyl nitrate solution for removal via filtration and solvent extraction.

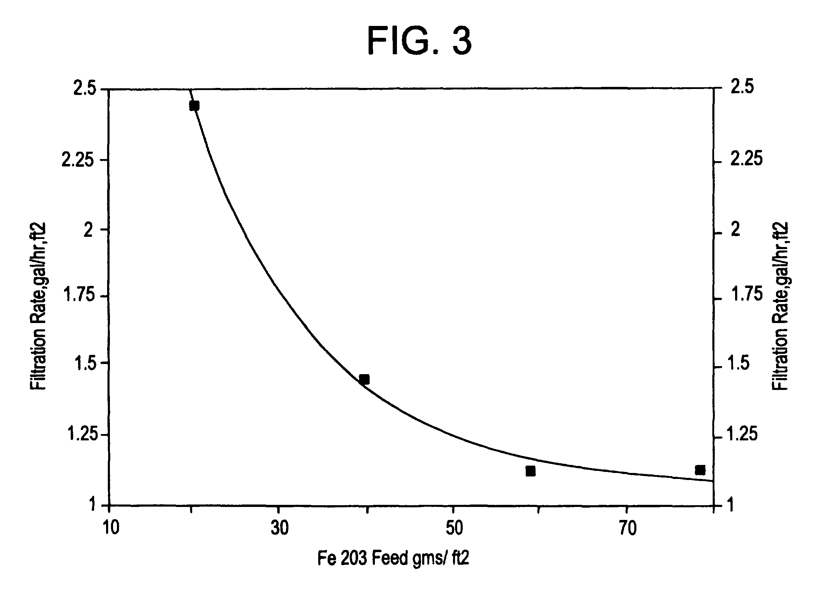

Figure 3 shows the filtration rate of the uranyl nitrate solution with $\alpha$-$Fe_2O_3$ particulate material through a production filter media. The filtration rate gave a steady state value of about 1 gal/ft$^2$. This was adequate for production purposes. Each of the filtrates was analyzed for U/Fe as indicated below. The particulate and soluble iron remaining in the uranyl nitrate solution following filtration was removed by solvent extraction.

| Filtrate No. | U | Fe |
| --- | --- | --- |
| | ppm(v) | ppm(v) |
| 1 | 177,100 | 3055 |
| 2 | 178,975 | 2898 |
| 3 | 177,575 | 4153 |
| 4 | 177,575 | 3643 |

In a production run, over 2200 kgs of the U/Fe alloy was converted to $UO_2$ powder. Based on the performance of the laboratory jaw crusher, the jaw opening was set to 1/8 inch. This unit was housed in a containment hood for radiological purposes. Sparks, smoke, and heat were observed during the size reduction operation, but the material did not burn, because the temperature was considerably below 600 °C.

The uranium alloy particles were oxidized in the production furnace at a feed rate of 30 kgs (U)/hr, and a residence time of 2½ hours. All particle fractions were completely oxidized at 400 °C, except for a few large particles that were recycled. During nitric acid dissolution and filtration, the uranium oxide dissolved solution, and hematite, $\alpha$-$Fe_2O_3$, was filtered at the rate determined by the laboratory filtration tests described previously. A clear, yellow uranyl nitrate solution was fed to solvent extraction which was performed according to conventional methods using a mixture of tributylphosphate (30% by weight) and n-dodecane (70 % by weight). The soluble iron content ranged from 3279 to 7500 ppm(v), depending on the dissolution batch. Before filtration, the iron content of the uranyl nitrate solution averaged 16,017 ppm(v).

Table 4 summarizes the metal impurity results observed in the final $UO_2$ powder. All elements are below the ASTM and the typical utility specifications for $UO_2$ powder. The powder met the ceramic grade criteria of a sinter density of about 98% TD with high sintered pellet integrity. Other ceramic characteristics include:

Densification -- 0.4840% TD (Limit 1.4%)

Closed porosity - 1.71919%

Total porosity - 1.73065%

Average Grain Size - 12.2 microns

Ginder Yield - 95.01%

Table 4

| Item | Element | ASTM Spec. Powder ppm (U) | Utility' Industry Spec. Powder ppm(U) | UO2 Powder Metal Impurity Results ppm(U) |
|---|---|---|---|---|
| | Metal Impurity Results Production Run 2200 kgs UO2 | | | |
| 1 | Aluminum | 250 | 100 | 7.-16 |
| 2 | Boron | | 1 | 0.2 |
| 3 | Cadmium | | 1 | 0.3 |
| 4 | Carbon | 100 | 75 | 19-62 |
| 5 | Calcium | 150 | 150 | 14.5 - 52.2 |
| 6 | Calcium + Magnesium | 200 | 200 | 15.5 - 53.2 |
| 7 | Chlorine | 100 | 15 | 0.1 - 1.4 |
| 8 | Chromium | 200 | 250 | 2 - 7.5 |
| 9 | Cobalt | 100 | 50 | 1 |
| 10 | Copper | 250 | 100 | 0.5-1.6 |
| 11 | Dyprosium | | 0.5 | 0.05 |
| 12 | Europium | | 0.5 | 0.05 |
| 13 | Fluorine | 100 | 75 | 1. - 4 |
| 14 | Gadolinium | | 0.5 | 0.05 |
| 15 | Iron | 250 | 250 | 5. - 74 |
| 16 | Lead | 250 | 50 | 1.3-3.1 |
| 17 | Magnesium | | 50 | 1 |
| 18 | Manganese | 250 | 75 | 2 - 5.2 |
| 19 | Molybdenum | 250 | 100 | 3 - 8.8 |
| 20 | Nickel | 200 | 150 | 2.5 - 15.9 |
| 21 | Nitrogen | 200 | 75 | 4 - 66. |
| 22 | Phosphorus | 250 | 200 | 20 |
| 23 | Samarium | | 0.7 | 0.05 |
| 24 | Silicon | 300 | 100 | 5 |
| 25 | Silver | | 1 | 0.1 - 0.2 |
| 26 | Sodium | | 400 | 8 - 77.6 |
| 27 | Tantalum | 250 | | 1 |
| 28 | Thorium | 10 | 8 | 0.1-0.22 |
| 29 | Tin | 250 | 400 | 1 - 1.2 |
| 30 | Titanium | 250 | | 2.9 - 27.8 |
| 31 | Tungsten | 250 | | |
| 32 | Vanadium | 250 | 150 | 1 - 4.1 |
| 33 | Zinc | 250 | 50 | 2 - 3.1 |
| 34 | Zirconium | | | |
| 35 | Total Rare Earths (Dysprosium, Europium, Gadolinium, Samarium) | | 1 | 0.2 |

Literature References:

1. Wilkinson, W.D., Uranium Metallurgy, Vols. I and II, Interscience Publishers, 1962.

## EP 1 041 578 A2

2. Epstein, M., Luangilok, W., Plys, M.G., and Fuaski, H.K., Nuclear Safety, 37(1), 12, 1996.

## Claims

1.  A process for producing U02 powder, comprising heating ammonium diiuranate obtained by solvent extraction of an acid solution of uranium and metal impurities generated by oxidation of a uranium-containing metal alloy powder at elevated temperature.

2.  A process according to claim 1, wherein said elevated temperature is in the range of 350-500°C.

3.  A process according to claim 2, wherein said temperature is about 40WC.

4.  A process according to claim 1,2 or 3 wherein said uranium-containing metal alloy powder is produced by comminuting a uranium-containing metal alloy using size reduction equipment.

5.  A process according to claim 4, wherein said size reduction equipment is a jaw crusher.

6.  A process according to any preceding claim, wherein said uranium-containing metal alloy powder has a size range of less than 75 microns to 850 microns.

7.  A process according to any preceding claim, wherein said acid solution is obtained by dissolving the $U_3O_8$, and metal impurities in nitric acid to form a uranyl nitrate slurry and filtering the slurry to produce said acid solution.

8.  A process according to any preceding claim, wherein said solvent extraction is carried out using a mixture of tributylphosphate and n-dodecane.

9.  A process according to claim 8, wherein said said mixture is 30% by weight tributylphosphate and 70% by weight ndodecane.

10. A process according to any preceding claim, wherein said uranium is precipitated from said acid solution as ammonium diiuranate.

11. A process according to claim 10, wherein said ammonium diiuranate is produced using ammonium hydroxide as precipitating agent.

12. A process according to claim 10 or 11, wherein said ammonium diiuranate precipitate is separated and calcined to produce $UO_2$.

13. A process according to any preceding claim, wherein said alloy is selected from the group consisting of U/Fe, U/Ni and U/Cr.

14. A process according to claim 1, which is carried out without ignition or burning of the metal alloy.

15. A process for producing $UO_2$ powder, comprising the steps of comminuting a uranium-containing metal alloy to produce a uranium-containing metal alloy powder, oxidizing the uranium-containing alloy powder at elevated temperature to produce oxidized metal alloy containing $U_3O_8$ and metal impurities, dissolving the oxidized metal alloy containing $U_3O_8$ and metal impurities in nitric acid, filtering to produce a uranyl nitrate solution, subjecting the uranyl nitrate solution to solvent extraction to remove remaining metal impurities to produce a purified uranyl nitrate solution, precipitating ammonium diiuranate from said uranyl nitrate solution, and heating said ammonium diiuranate precipitate to produce $UO_2$ powder.

16. A $UO_2$ powder produced by the process of claim 1.

17. A $UO_2$ powder produced by the process of claim 15.

# FIG. 1

| Size Reduction (1) | → | Oxidation (2) | → | Dissolving (3) | → | Filtration (4) | → | Solvent Extraction (5) | → | Purified Uranyl Nitrate Storage (8) | → | Precipitation of Ammonium DiUranate (9) |

Solid Waste Treatment (6)

Liquid Waste Treatment (7)

| Centrifuge (10) | → | Conversion to Uranium Dioxide (11) | → | Mill Slug Granulate (12) | → | Press (13) | → | Sinter (14) | → | Grind (15) | → | Load into Fuel Rods (16) |

EP 1 041 578 A2

# FIG. 2

Time, mins

FIG. 3